# DEMANDE DE BREVET EUROPEEN

(11) **EP 1 832 852 A1**
(43) Date de publication de la demande: **12.09.2007**
(21) Numéro de dépôt: 07290265.3
(22) Date de dépôt: 02.03.2007
(51) Int. Cl.: G01D 5/14, G01P 3/487

(54) **Codeur pour arbre, dispositif comprenant un tel codeur et procédé de fabrication d'un tel codeur.**

(30) Priorité: 06.03.2006 FR 0601983
(71) Demandeur: Hutchinson, 75008 Paris (FR)
(72) Inventeur: Branchereau, Bernard, 49500 Serge (FR)
(74) Mandataire: Cabinet Plasseraud

(57) **Abrégé**

Codeur de déplacement pour arbre mobile, comprenant un manchon (2) destiné à être calé sur l'arbre (3) et au moins un aimant permanent (4), formant au moins un repère magnétique polarisé. Une couche d'élastomère (10) est située entre l'aimant permanent (4) et le manchon (2). Cette couche d'élastomère (10) est adhérisée à l'aimant permanent (4) et au manchon (2).

L'invention se rapporte également à un dispositif pour arbre mobile comprenant un tel codeur et au procédé de fabrication du codeur.

## Description

La présente invention se rapporte à un codeur de déplacement pour arbre mobile, et plus particulièrement, à un codeur comprenant un manchon destiné à être calé sur l'arbre et un aimant permanent formant au moins un repère magnétique polarisé.

Dans de nombreuses applications, et notamment pour des arbres de roues, des arbres de sorties de boîtes de vitesse ou des vilebrequins de moteurs à combustion interne, on équipe les arbres rotatifs de dispositif de codage de déplacement angulaire pour connaître leur vitesse de rotation instantanée et/ou leur position angulaire et/ou leur sens de rotation.

La fonction de codage peut être réalisée par un ou plusieurs repères magnétiques polarisés qui forment une zone codeuse dont le déplacement est détecté par un détecteur de champ magnétique disposé en regard de cette zone codeuse. Pour ce type de codeur, il est connu, notamment du document FR-A 2 777 060, de réaliser le ou les repères de la zone codeuse à l'aide d'une couche d'élastoferrite, c'est-à-dire un polymère de type élastomère contenant une forte proportion de particules magnétiques comme par exemple de la poudre de ferrite, qui est adhérisée lors de son moulage au manchon du codeur. Une telle solution est pratique à mettre en oeuvre du fait de la formation de la couche magnétique et des repères polarisés, ainsi que l'adhérisation de cette couche au manchon lors du processus de moulage.

Toutefois, le champ magnétique produit par l'élastoferrite n'atteint pas une intensité suffisante pour certaines applications. Pour augmenter l'intensité du champ magnétique créé par un élastoferrite, il est connu d'augmenter la proportion de particules magnétiques. Mais les densités de particules magnétiques désormais atteintes rendent l'élastoferrite trop fragile et friable pour certaines applications.

Il est aussi connu, notamment du document EP-A-1 517 149, de réaliser les repères de la zone codeuse à l'aide d'un aimant permanent, c'est-à-dire à par exemple en ferrite, ou en Néodyme Fer/Bore (NdFeB). Une telle solution permet d'augmenter l'intensité du champ magnétique produit. Dans ce document, l'aimant permanent est fixé au manchon par un sertissage périphérique continu ou discontinu. Ce sertissage peut être réalisé par une déformation locale contre l'aimant permanent, en un certains nombres de points espacés d'une partie du manchon cylindrique. Ce sertissage peut aussi être réalisé par la déformation contre l'aimant permanent, d'une série de langues de la périphérie du manchon.

Cependant tous ces aimants permanents sont des matériaux connus pour leur sensibilité à la corrosion, mais aussi pour leur fragilité, c'est-à-dire sensibilité à se fissurer lors de contraintes mécaniques trop importantes. Ces contraintes peuvent venir du sertissage du manchon contre l'aimant permanent, ou des vibrations de l'arbre, ou encore des chocs provenant de matériaux projetés lors du roulage d'un véhicule.

La présente invention a pour but de pallier à ces inconvénients en proposant un codeur de déplacement présentant une intensité de champs magnétique élevée, et une bonne tenue mécanique aux vibrations, et aux chocs.

A cet effet, la présente invention a pour objet un codeur de déplacement du type précité, caractérisé en ce que une couche d'élastomère est située entre l'aimant permanent et le manchon, et en ce que ladite couche d'élastomère est adhérisée à l'aimant permanent et au manchon.

Le codeur ainsi réalisé résiste particulièrement bien aux vibrations grâce à la couche d'élastomère qui réalise une filtration et un amortissement des vibrations entre le manchon soumis aux vibrations de l'arbre et le ou les aimants permanents. Ainsi l'aimant est moins sujet aux détériorations.

De plus, le codeur ainsi réalisé possède une très bonne tenue mécanique grâce à l'adhérisation forte entre l'aimant et la couche d'élastomère, puis entre cette même couche d'élastomère et le manchon. Ce moyen de fixation par adhérisation est de plus peu sensible aux vibrations et ne produit pas de contrainte mécanique dans l'aimant permanent, contrairement aux autres moyens de fixation mécanique tels que le sertissage.

Dans des modes de réalisation préférés de l'invention, on a recours en outre à l'une et/ou l'autre des dispositions suivantes:
- la couche d'élastomère présente une épaisseur comprise entre 0,01 mm et 3 mm ;
- l'élastomère de la couche située entre l'aimant permanent et le manchon est un élastomère thermoplastique ;
- l'aimant permanent est du type plasto-aimant ;
- l'aimant permanent dispose d'une couche de protection, améliorant ainsi sa résistance à l'oxydation;
- la couche de protection est une couche mince de matière déposée par plasma directement sur l'aimant permanent ;
- la couche de protection est un adhésif d'élastomère, ce qui simplifie le procédé de fabrication et est peu onéreux ;
- le manchon est en matière plastique ; ce qui présente les avantages d'être plus économique, et de permettre de nombreuses facilités d'adhérisation avec des matières telles que les thermoplastiques élastomères éventuellement utilisables par exemple pour la couche d'élastomère entre le manchon et l'aimant permanent ;
- au moins une lèvre annulaire est destinée à venir en contact avec un carter fixe entourant l'arbre mobile.

L'invention se rapporte également à un dispositif comprenant un arbre mobile par rapport à un carter fixe et un codeur de déplacement qui comprend un manchon calé sur l'arbre et un aimant permanent formant au moins un repère magnétique polarisé, caractérisé en ce que une couche d'élastomère est située entre l'aimant permanent et le manchon, et en ce que ladite couche d'élastomère est adhérisée à l'aimant permanent et au manchon.

Ce dispositif peut comprendre en outre un liquide remplissant le carter, et au moins une lèvre annulaire solidaire du codeur, qui est en contact glissant avec le carter et assure l'étanchéité entre ledit arbre et ledit carter.

Par ailleurs, l'invention a pour objet un procédé de fabrication d'un codeur de déplacement comprenant un manchon, destiné à être calé sur l'arbre et au moins un aimant permanent formant au moins un repère magnétique, caractérisé en ce qu'il comprend les étapes de :
- (i) placement dans un premier demi moule dudit manchon ;
- (ii) placement dans un deuxième demi moule de l'aimant permanent ;
- (iii) fermeture du moule, l'aimant permanent étant situé à distance du manchon ;
- (iv) vulcanisation d'une couche d'élastomère introduite préalablement entre le manchon et l'aimant permanent, pour conformer ladite couche d'élastomère selon un profil déterminé, et pour adhériser ladite couche d'élastomère au manchon et à l'aimant permanent.

Pour ce procédé de fabrication, la couche d'élastomère introduite préalablement à l'étape (iv) de vulcanisation, peut être introduite :
- soit par injection ou transfert dans le moule fermé ;
- soit par le placement d'une préforme en élastomère avant la fermeture du moule.

Ce procédé peut également comprendre préalablement aux étapes de placement (i) et (ii), un traitement de surface du manchon, et/ou de l'aimant permanent, par un traitement approprié comprenant le dépôt d'au moins une couche d'adhérisation.

Ce procédé peut également comprendre une opération de formation des repères polarisés par application d'un champ magnétique à l'aimant permanent, après l'étape (iv) de vulcanisation.

D'autres caractéristiques et avantages de l'invention apparaîtront au cours de la description qui va suivre, donnée à titre d'exemples non limitatifs en référence aux dessins annexés dans lesquels :
- la figure 1 est une vue en coupe longitudinale simplifiée d'un arbre muni d'un codeur de déplacement selon un premier mode de réalisation de l'invention ;
- la figure 2 est une vue en coupe analogue à la figure 1 d'un deuxième mode de réalisation ;
- la figure 3 est une vue en coupe analogue à la figure 1 d'un troisième mode de réalisation ;
- la figure 4 est une vue en coupe analogue à la figure 1 d'un quatrième mode de réalisation ;
- la figure 5 est une vue en coupe analogue à la figure 1 d'un cinquième mode de réalisation ;
- la figure 6 est une vue en coupe analogue à la figure 1 d'un sixième mode de réalisation ;
- la figure 7 est une vue en coupe analogue à la figure 1 d'un septième mode de réalisation ;
- la figure 8 est une vue en coupe analogue à la figure 1 d'un huitième mode de réalisation ;

Sur les différentes figures on a conservé les mêmes références pour désigner des éléments identiques ou similaires.

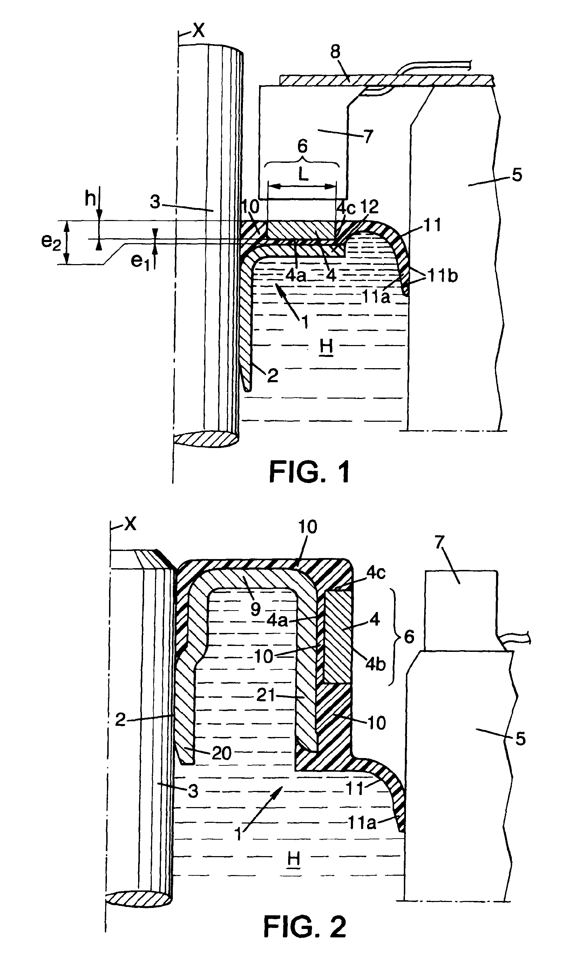

Comme on peut le voir sur la figure 1, le codeur angulaire 1 comprend un manchon 2 calé en rotation sur un arbre 3 rotatif à travers l'ouverture d'un carter fixe 5. Des repères magnétiques polarisés sont prévus dans une zone 6, dite zone codeuse, du codeur.

Le carter fixe 5 entourant le codeur angulaire 1 sert de base fixe pour un capteur 7 solidarisé au carter par l'intermédiaire d'une platine 8.

L'arbre rotatif 3 peut être constitué par tout arbre de machine tournante, comme par exemple un arbre de transmission ou un arbre de roue. On notera, d'une part, que le codeur angulaire 1 n'est pas nécessairement placé sur une portion de l'arbre entouré par un carter fixe, mais peut être placé à distance de tout carter ou pallier du moment qu'un capteur peut être maintenu à proximité de la zone codeuse 6. D'autre part, il pourrait s'agir d'un arbre effectuant un mouvement de translation selon son axe longitudinal X.

Le manchon 2 est monté sur l'arbre 3 par emmanchement à force. Ce montage particulièrement simple permet d'immobiliser le manchon 2 en rotation et en translation par rapport à l'arbre 3. Mais on peut utiliser tout autre montage qui assure une immobilisation en rotation du manchon par rapport à l'arbre. Le manchon est souvent métallique, mais il peut être avantageux d'utiliser un manchon en matière plastique.

La zone codeuse 6 présente une forme, ici annulaire plane, et un nombre de repères polarisés adaptés pour que son déplacement avec l'arbre 3 permette de déterminer, par exemple, la position angulaire, la vitesse de rotation ou encore le sens de rotation de l'arbre.

Les repères polarisés de la zone codeuse 6 sont formés par une succession de secteurs angulaires polarisés alternativement nord-sud, avec éventuellement un secteur non polarisé ou une zone polarisée qui est plus étendue ou plus réduite que les autres, afin de déterminer une position angulaire absolue de l'arbre. La zone codeuse 6 forme donc une piste circulaire dans ce mode de réalisation. Toutefois, si le codeur angulaire est utilisé uniquement pour détecter une rotation ou un sens de rotation de l'arbre, la présence de repères polarisés sur l'ensemble du pourtour du manchon 2 n'est pas nécessaire.

Le capteur 7 doit être adapté pour détecter une variation du champ magnétique et pour cela on peut utiliser notamment un capteur à effet hall ou équivalent. Le capteur 7 est positionné de manière statique en regard de la zone codeuse circulaire 6 formée par les repères polarisés, afin de détecter les variations du champ magnétique.

La zone codeuse 6 comprend un aimant permanent 4 qui génère un champ magnétique bipolaire ou multipolaire, de manière à former un ou plusieurs des repères polarisés détectés par le capteur 7. Il peut s'agir de tous types d'aimants permanents connus qui se présentent sous la forme d'une pièce rigide réalisée avant la fabrication du codeur de déplacement 1. Les aimants permanents génèrent des champs plus intenses que ceux que l'on peut obtenir avec un matériau de type élastoferrite, de sorte que l'entrefer, c'est-à-dire la distance séparant la zone codeuse du capteur 7, peut-être plus important, ou que l'on peut utiliser un capteur magnétique moins sensible.

Le type de l'aimant permanent 4 est choisi notamment en fonction de son coût et de l'intensité recherchée pour les repères polarisés. A titre d'exemple, l'aimant permanent est de type fritté, c'est-à-dire formé de particules magnétiques agglomérées ensemble par frittage, appelées aussi aimants céramiques. Ce type d'aimant, comme par exemple, les aimants comprenant de la ferrite de strontium ou du samarium-cobalt, génère des champs magnétiques supérieurs aux élastoferrites, de l'ordre de deux fois supérieurs dans le cas du samarium-cobalt. Les aimants frittés à base de samarium-cobalt présentent une faible perte du champ magnétique lorsque la température s'élève, et sont donc avantageux pour réaliser des codeurs devant fonctionner sur une large plage de température, par exemple de - 50°C à + 250°C.

Les aimants frittés à base de Néodyme Fer/Bore (NdFeB) génèrent des champs magnétiques encore plus important et sont moins fragile, mais ils sont plus onéreux et beaucoup plus sensibles à la corrosion.

Les aimant Alnico, moulés ou frittés, génèrent un champs magnétique modeste, mais supérieur aux aimants céramique en ferrite. Les aimants Alnico possèdent la plus large plage de température utilisable, par exemple de - 40 °C à + 525 °C. De plus, les aimants Alnico, à base d'Aluminium, Nickel, Cobalt et Fer, sont parmi les plus résistants à la corrosion.

Dans tous les cas, les aimants permanents se présentent sous la forme d'une pièce très rigide.

Il est également possible d'utiliser un plasto-aimant qui se présente sous forme d'une pièce relativement rigide dans laquelle les particules magnétiques, comme par exemple des terres rares, des ferrites de strontium ou du samarium-cobalt, sont liées par une matière plastique ou thermoplastique. Certains plasto-aimants, et notamment ceux du type samarium-cobalt, présentent l'avantage de générer des champs magnétiques intenses et stables dans le temps. De plus, les plasto-aimants peuvent être réalisés dans des formes variées.

L'aimant 4 présente une face avant 4b disposée sur la surface extérieure du codeur angulaire 1, une face arrière 4a opposée à la face avant 4b et des faces latérales 4c reliant les faces avant et arrière. On notera que la face arrière 4a n'est pas en contact avec le manchon 2.

L'aimant permanent 4 peut éventuellement être recouvert d'une couche de protection, afin d'améliorer sa résistance à l'oxydation et à l'abrasion de l'environnement sévère du codeur de déplacement : eau, poussières, sable, boue, ... Cette couche de protection, non représentée sur les figures du fait de sa faible épaisseur, peut être constituée de différentes matières déposées par des procédés divers. Par exemple, cette couche de protection peut être :
- une couche de polymère, ayant une résistance superficielle importante. Par exemple, cette couche de protection peut être en PTFE, qui, outre une résistance superficielle à l'abrasion suffisante, présente l'avantage d'être anti-adhérent de sorte que l'accumulation de poussières sur l'aimant permanent est évitée ;
- une peinture ;
- un adhésif d'élastomère. Cet adhésif pourra être ainsi déposé sur toutes les faces de l'aimant permanent 4, et permettra sur les faces 4a et 4c l'adhérisation d'une couche d'élastomère 10, et permettre pour la face 4b de protéger l'aimant permanent 4. Cette solution simplifie le procédé de fabrication et est peu onéreuse ;
- une couche mince de matière déposée par plasma. Par exemple, cette couche peut être formée de carbone amorphe ou d'oxydes de silicium et présenter une épaisseur comprise par exemple entre 50 nanomètres et 500 nanomètres. Grâce au dépôt par plasma, on obtient une adhésion de la couche protectrice à la fois très fine et suffisamment forte pour résister à l'abrasion et à la corrosion provoquée par un environnement sévère.

Une couche d'élastomère 10 est moulée entre les faces non apparentes (4a, 4c) de l'aimant permanent 4 et le manchon 2, et permet d'assurer la fixation mécanique de l'aimant permanent 4 sur le manchon 2 grâce à ses capacités d'adhérisation sur les matériaux métalliques et plastiques. De plus, l'élastomère utilisé, comprenant les caoutchoucs naturels ou synthétiques ou élastomères thermoplastiques, possède une bonne résistance aux contraintes mécaniques, notamment aux vibrations et aux dilatations thermiques, ainsi qu'une résistance satisfaisante à la plupart des produits chimiques que l'on peut rencontrer dans l'environnement d'un codeur de déplacement.

La couche d'élastomère 10 permet de reprendre les déformations liées à la dilatation thermique du manchon 2 par rapport à l'aimant permanent 4. Cet avantage procuré par la couche en élastomère 10 permet de conserver un bon positionnement autant axial que radial de l'aimant permanent 4, et permet au capteur 7 de fournir un signal de déplacement d'une meilleure qualité et ayant des variations thermiques plus faibles. Cet avantage est particulièrement utile, par exemple, dans le cas d'un codeur de déplacement utilisé sur un moteur à combustion interne.

La forte rigidité de l'aimant permanent 4 permet de limiter les vibrations propres de cet élément. Plus encore, la forte rigidité de l'aimant permanent 4 par rapport à la faible rigidité de la couche d'élastomère 10 permet de limiter la transmission des vibrations depuis le manchon 2 jusqu'à cet aimant permanent. La réduction globale des vibrations de l'aimant permanent 4 permet aussi au capteur 7 de fournir un signal de déplacement d'une meilleure qualité et avec une meilleure stabilité.

La couche d'élastomère 10 entre la face arrière 4a de l'aimant permanent 4 et le manchon 2 présente une épaisseur e1 mesurée perpendiculairement à la face avant 4b, tandis que les faces latérales 4c sont entourées par une couche d'élastomère présentant une épaisseur e2.

Selon les applications auxquelles est destiné le codeur de déplacement, l'épaisseur e1 et la nature de l'élastomère utilisé pour la couche 10 permettent de régler les caractéristiques de la filtration des vibrations de l'aimant permanent 4.

Par exemple, plus l'épaisseur e1 sera importante ou plus l'élastomère utilisé sera souple, plus les vibrations seront atténuées. Cependant, l'épaisseur e1 ne pourra pas être trop grand pour des raisons d'encombrement et de débattement trop élevé de l'aimant permanent 4. Ainsi, la couche d'élastomère e1 sous l'aimant permanent 4 pourra prendre une valeur comprise entre 0,01 mm et 3 mm.

L'élastomère utilisé pour la couche 10 pourra posséder un amortissement important s'il est nécessaire d'amortir les vibrations de l'aimant permanent 4 pour certains phénomènes de résonances vibratoires.

L'élastomère de la couche 10 peut éventuellement être un élastomère thermoplastique. Dans ce cas, et si le manchon 2 est en matière plastique, l'adhérisation entre la couche d'élastomère 10 et le manchon 2 peut se faire d'une manière naturelle, c'est-à-dire sans couche d'adhérisation sur le manchon 2, ce qui est très économique.

Pour l'aimant permanent 4, on choisit un aimant se présentant sous forme d'une pièce mince, c'est-à-dire dont l'épaisseur mesurée entre la face arrière 4a et la face avant 4b, h sur la figure 1, est sensiblement inférieure à la largeur L de la zone codeuse 6. Une épaisseur h de l'aimant 4 comprise entre un sixième et un tiers de la largeur L de la zone codeuse permet d'obtenir un bon compromis entre l'intensité du champ magnétique généré et l'encombrement selon l'axe X du codeur de déplacement.

La zone codeuse 6 présente une forme annulaire entourant toute la périphérie de l'arbre, notamment dans le but de coder une position angulaire absolue de l'arbre ou de déterminer de manière quasi-instantanée la vitesse ou le sens de rotation de l'arbre. Pour former une zone codeuse annulaire, on dispose un ou plusieurs aimants permanents contre le manchon 2, de manière à décrire un cercle concentrique à l'arbre.

Par exemple, dans le mode de réalisation représenté à la figure 1, le manchon 2 présente une collerette annulaire 12 s'étendant radialement par rapport à l'axe longitudinal X. La zone codeuse circulaire 6 est alors formée d'un aimant annulaire 4 magnétisé de manière multipolaire, avec éventuellement des singularités. L'aimant permanent 4 présente alors la forme d'un anneau plat disposé concentriquement à l'axe longitudinal X, qui permet de former avec précision l'ensemble de la zone codeuse. Toutefois, il est parfaitement envisageable de réaliser la zone codeuse à l'aide de plusieurs aimants permanents présentant la forme d'une portion angulaire d'un anneau plat, les faces d'extrémité circonférentielles de deux aimants consécutifs étant disposés l'une contre l'autre, de manière à former une zone codeuse continue. Il est également envisageable de placer un ou quelques aimants se présentant par exemple sous la forme de pastilles pour former un repère unique ou quelques repères espacés.

On notera que l'aimant 4 présente une largeur L qui permet de recouvrir la majeure partie, ici environ 75%, de la portion du manchon 2 formée par la collerette 12.

Dans le mode de réalisation représenté à la figure 1, la couche d'élastomère 10 s'étend radialement par rapport à l'arbre 3 au-delà de la collerette 12 jusqu'à venir en contact avec la paroi 5a du carter fixe. Ainsi, la couche 10 forme une lèvre d'étanchéité 11 en contact rotatif glissant avec le carter 5. La couche en élastomère 10 et la lèvre 11 venue de matière avec celle-ci, sont réalisée simultanément au cours du processus de fabrication.

Le codeur angulaire 1 ainsi réalisé remplit une fonction de joint dynamique d'étanchéité en plus de sa fonction de codage. Ce mode de réalisation du codeur angulaire est donc tout particulièrement destiné à un dispositif tel qu'un moteur ou une boîte de vitesse, dans lequel le carter 5 rempli d'un liquide H, éventuellement sous pression, est traversé par un arbre 3, pour assurer l'étanchéité entre l'arbre et le carter.

Dans ce mode de réalisation, la base de la lèvre 11 s'étend sensiblement dans le prolongement de la couche 10 et est recourbée dans la configuration représentée lors de la mise en place du codeur angulaire sur l'arbre 3. L'extrémité 11a de la lèvre peut comporter sur sa surface en contact avec le carter fixe 5, des gorges 11b qui améliorent l'étanchéité dynamique entre la lèvre et la surface radiale 5a du carter en regard de l'arbre 3.

Il est bien entendu possible que la lèvre 11 présente une configuration géométrique plus complexe pour s'adapter à la configuration de la surface avec laquelle elle doit venir en contact ou pour augmenter ses propriétés d'étanchéité.

A la figure 2, est représenté un deuxième mode de réalisation analogue au premier mode, c'est-à-dire comportant une lèvre d'étanchéité 11 intégralement formée avec la couche d'élastomère 10.

Dans ce deuxième mode, la zone codeuse 6 s'étend longitudinalement et est orientée radialement vers le capteur 7. La zone codeuse 6 est formée par un aimant tubulaire cylindrique 4 qui entoure à une distance e1 une paroi cylindrique extérieure du manchon 2 coaxiale à l'axe longitudinal X, de sorte que la zone codeuse est annulaire et concentrique à l'arbre 3. L'utilisation d'un aimant tubulaire en une pièce permet d'obtenir une grande précision de positionnement des repères polarisés, mais l'utilisation de plusieurs aimants est également possible.

La couche d'élastomère 10 couvre toute la surface extérieure du manchon 2. L'aimant 4 couvre une partie de cette couche d'élastomère 10, par sa surface cylindrique interne 4a.

Le manchon 2 présente une section en U, une première branche 20 du U venant enserrer l'arbre 3, une deuxième branche 21 supportant l'aimant 4 et la base 9 du U permettant de combler une partie du jeu entre l'arbre 3 et le carter 5.

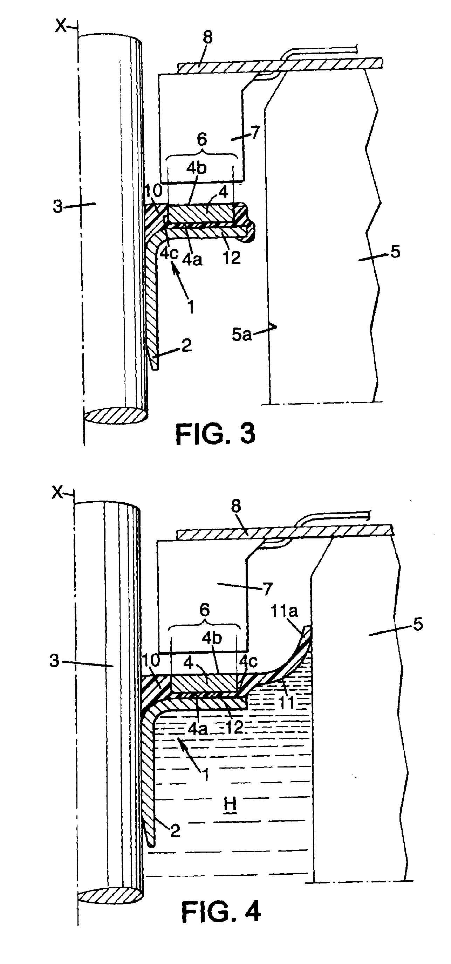

A la figure 3 est représenté un troisième mode de réalisation analogue au premier mode. Dans ce mode de réalisation, la lèvre d'étanchéité 11 a été supprimée.

A la figure 4 est représenté un quatrième mode de réalisation analogue au premier mode de réalisation, c'est-à-dire comportant une lèvre d'étanchéité 11 intégralement formée avec la couche 10 d'élastomère. Dans ce quatrième mode de réalisation, la lèvre 11 est recourbée vers l'extérieur du carter 5 rempli d'un liquide H.

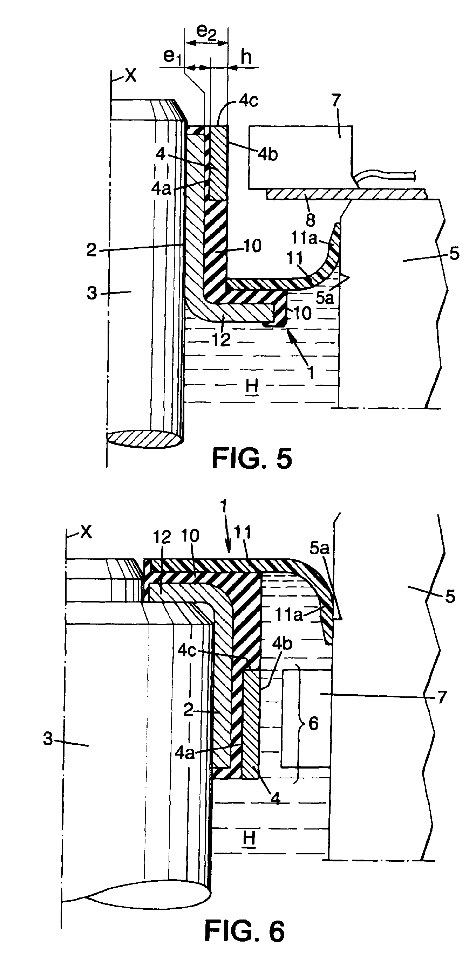

Dans le mode de réalisation de la figure 5, le manchon 2 en L présente une première branche 20 du L venant enserrer l'arbre 3 et une collerette annulaire radiale 12. La première branche 20 supporte l'aimant permanent 4 par l'intermédiaire de la couche d'élastomère 10. La collerette annulaire 12 est recouverte par de l'élastomère intégralement formé avec la couche 10, et formant une surface de support sur laquelle une lèvre d'étanchéité 21 en PTFE (polytétrafluoroéthylène) peut être adhérisée.

Selon un sixième mode de réalisation, présenté à la figure 6, le capteur 7 est agencé dans l'espace intérieur du carter contenant le liquide H, contre la paroi 5a du carter, orienté radialement vers l'arbre 3. Un manchon 2 d'une section en L avec une première branche 20 du L venant enserrer l'arbre 3 et une collerette annulaire 12 s'étendant radialement et concentriquement par rapport à l'axe longitudinal X et venant en appui sur un épaulement 30 de l'arbre 3. La collerette annulaire 12 est recouverte par un prolongement de la couche d'élastomère 10, qui forme également un support pour une lèvre 21.

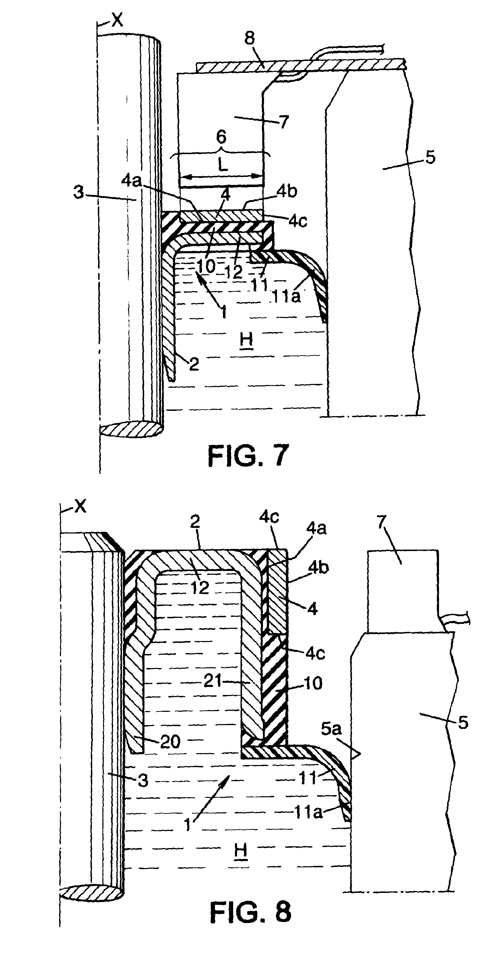

A la figure 7, est représenté un septième mode de réalisation analogue au premier mode de réalisation. Dans ce mode de réalisation, la couche d'élastomère 10 recouvre partiellement la face intérieure de la collerette 12 pour servir de support à la lèvre 21 en PTFE.

A la figure 8, est représenté un huitième mode de réalisation analogue au deuxième mode de réalisation. Dans ce mode de réalisation, la lèvre 21 en PTFE est supportée par la couche d'élastomère 10, et est située à l'extrémité de la deuxième branche 21 du manchon 2 présentant une section en U. Dans ce dernier mode de réalisation, l'aimant permanent 4 présente une face codeuse 4b orientée radialement. Il est supporté par une branche du manchon en U opposé à celle en contact direct avec l'arbre mobile 3.

On peut réaliser le codeur angulaire 1 selon le procédé de fabrication comprenant les étapes suivantes :
- (i) placement dans un premier demi moule dudit manchon 2 ;
- (ii) placement dans un deuxième demi moule de l'aimant permanent 4. Cet aimant permanent 4 peut être maintenu dans ce deuxième demi moule par différentes méthodes qui comprennent des moyens mécaniques, des moyens magnétiques, des moyens d'aspiration pneumatiques ou tout autre moyen permettant de maintenir immobile l'aimant permanent 4 dans le deuxième moule durant toutes les étapes du procédé de fabrication ;
- (iii) fermeture du moule, l'aimant permanent 4 étant situé à distance du manchon 2 ;
- (iv) vulcanisation d'une couche d'élastomère 10 introduite préalablement entre le manchon 2 et l'aimant permanent 4, pour conformer ladite couche d'élastomère 10 selon un profil déterminé, et pour adhériser ladite couche d'élastomère 10 au manchon 2 et l'aimant permanent 4.

Pour une première variante du procédé de fabrication, la couche d'élastomère est introduite préalablement à l'étape (iv) de vulcanisation par injection ou transfert dans le moule fermé.

Pour une deuxième variante du procédé de fabrication, la couche d'élastomère est introduite préalablement à l'étape (iv) de vulcanisation par placement d'une préforme en élastomère avant la fermeture du moule.

En outre, il est possible, préalablement aux étapes (i) et (ii) de réaliser un traitement de surface du manchon 2 et/ou de l'aimant permanent 4 par un traitement approprié comprenant le dépôt d'au moins une couche d'adhérisation. Ces étapes de traitement de surface permettent l'adhérisation de la couche d'élastomère 10 lors de la vulcanisation de celle-ci, c'est-à-dire, la création de lien chimiques entre le polymère de l'élastomère utilisé dans la couche 10 et la couche d'adhérisation.

Ce traitement peut varier selon la nature du manchon 2, et notamment selon qu'il s'agit d'un manchon métallique ou en matière plastique. Par exemple, pour un manchon métallique, le traitement de surface peut comprendre tout d'abord une opération de dégraissage, suivie d'une opération de phosphatation.

Ladite couche d'adhérisation se présente sous la forme d'un très fin film d'un précurseur chimique, constituée par exemple par une résine phénolique.

Ce traitement aussi peut varier sensiblement selon qu'il agit d'un aimant de particules magnétiques frittées ou d'un plasto-aimant. Mais le traitement de l'aimant permanent comprend également le dépôt d'une couche au moins d'adhérisation.

Le traitement de surface et le dépôt d'une couche au moins d'adhérisation, et plus particulièrement sur un aimant de particules magnétiques frittées, peut être très avantageux pour réaliser en plus de l'adhérisation une protection efficace et économique contre la corrosion de cet aimant permanent 4.

On notera que les traitements de surface du manchon 2 et de l'aimant permanent 4 peuvent être sensiblement différents du fait de la nature de leur matériau et de leur état de surface initial.

Une autre étape de fabrication, préalable à l'étape (iii) peut être ajoutée, au cours de laquelle on place concentriquement dans le premier demi moule une préforme d'une lèvre 11 d'étanchéité. Cette lèvre, éventuellement en PTFE, adhère alors à la couche d'élastomère 10 au cours de l'étape (iv) de vulcanisation de ladite couche d'élastomère.

Enfin, une opération de formation des repères polarisés par application d'un champ magnétique à l'aimant permanent 4, est prévue après l'étape (iv) de vulcanisation. Ainsi, l'aimant permanent non magnétisé, ou démagnétisé, ou magnétisé de manière mono polaire lors de son procédé de fabrication, est transformé en un aimant multipolaire formant une succession de secteurs angulaires polarisés alternativement nord-sud, permettant d'obtenir un codeur de déplacement.

Bien entendu, les modes de réalisation décrits précédemment ne sont nullement limitatifs. Il est notamment possible de réaliser un codeur angulaire avec un aimant permanent 4 qui ne s'étend pas selon une direction radiale ou longitudinale, mais selon une direction inclinée par rapport à l'arbre.

Par ailleurs, il apparaîtra à l'homme du métier que l'invention peut être appliquée à un codeur linéaire, solidaire d'un arbre coulissant, dont la zone codeuse comporte un ou plusieurs aimants. Dans ce type d'application, la zone codeuse présente un ou plusieurs repères polarisés répartis selon la direction de coulissement de l'arbre, afin d'être adapté pour coder un déplacement linéaire.

## Revendications

1. Codeur de déplacement pour arbre mobile, comprenant un manchon (2) destiné à être calé sur l'arbre (3) et au moins un aimant permanent (4) formant au moins un repère magnétique polarisé,
**caractérisé en ce que** une couche d'élastomère (10) est située entre l'aimant permanent (4) et le manchon (2),
et **en ce que** ladite couche d'élastomère (10) est adhérisée à l'aimant permanent (4) et au manchon (2).

2. Codeur de déplacement selon la revendication 1, dans lequel la couche d'élastomère (10) présente une épaisseur comprise entre 0,01 mm et 3 mm.

3. Codeur de déplacement selon la revendication 1 ou 2, dans lequel la couche d'élastomère (10) est en élastomère thermoplastique.

4. Codeur de déplacement selon l'une quelconque des revendications 1 à 3, dans lequel l'aimant permanent (4) est un plasto-aimant.

5. Codeur de déplacement selon l'une quelconque des revendications précédentes, dans lequel l'aimant permanent présente une couche de protection.

6. Codeur de déplacement selon la revendication 5, dans lequel la couche de protection est une couche mince de matière déposée par plasma directement sur l'aimant permanent.

7. Codeur de déplacement selon la revendication 5, dans lequel la couche de protection est un adhésif d'élastomère.

8. Codeur de déplacement selon l'une quelconque des revendications précédentes, dans lequel le manchon est en matière plastique.

9. Codeur de déplacement selon l'une quelconque des revendications précédentes, dans lequel au moins une lèvre annulaire est destinée à venir en contact avec un carter fixe entourant l'arbre mobile.

10. Dispositif comprenant un arbre (3) mobile par rapport à un carter fixe et un codeur de déplacement (1) qui comprend un manchon (2) calé sur l'arbre et un aimant permanent (4) formant au moins un repère magnétique polarisé,
**caractérisé en ce que** une couche d'élastomère (10) est située entre l'aimant permanent (4) et le manchon (2),
et **en ce que** ladite couche d'élastomère (10) est adhérisée à l'aimant permanent (4) et au manchon (2).

11. Dispositif selon la revendication 10, dans lequel un liquide rempli le carter, et dans lequel au moins une lèvre annulaire solidaire du codeur, qui est en contact glissant avec le carter et qui assure l'étanchéité entre ledit arbre et ledit carter.

12. Procédé de fabrication d'un codeur de déplacement comprenant un manchon (2) destiné à être calé sur l'arbre (3) et au moins un aimant permanent (4) formant au moins un repère magnétique,
**caractérisé en ce qu'**il comprend les étapes de:
- (i) placement dans un premier demi moule dudit manchon (2) ;
- (ii) placement dans un deuxième demi moule de l'aimant permanent (4) ;
- (iii) fermeture du moule, l'aimant permanent (4) étant situé à distance du manchon (2) ;
- (iv) vulcanisation d'une couche d'élastomère (10) introduite préalablement entre le manchon (2) et l'aimant permanent (4), pour conformer ladite couche d'élastomère selon un profil déterminé, et pour adhériser ladite couche d'élastomère (10) au manchon (2) et à l'aimant permanent (4).

13. Procédé de fabrication selon la revendication 12, dans lequel la couche d'élastomère est introduite préalablement à l'étape (iv) de vulcanisation par injection ou transfert dans le moule fermé ;

14. Procédé de fabrication selon la revendication 12, dans lequel la couche d'élastomère est introduite préalablement à l'étape (iv) de vulcanisation par placement d'une préforme en élastomère avant la fermeture du moule ;

15. Procédé de fabrication d'un codeur de déplacement selon l'une quelconque des revendications 12 à 14, dans lequel préalablement aux étapes (i) et (ii) on réalise un traitement de surface du manchon (2) et/ou de l'aimant permanent (4) par un traitement approprié comprenant le dépôt d'au moins une couche d'adhérisation.

16. Procédé de fabrication d'un codeur de déplacement selon l'une quelconque des revendications 12 à 15, dans lequel une opération de formation des repères polarisés par application d'un champ magnétique à l'aimant permanent (4), est prévue après l'étape (iv) de vulcanisation.
